(19) **Europäisches Patentamt**

**European Patent Office**

**Office européen des brevets**

(11) **EP 1 032 169 B1**

(12) **FASCICULE DE BREVET EUROPEEN**

(45) Date de publication et mention
de la délivrance du brevet:
**14.09.2005 Bulletin 2005/37**

(51) Int Cl.⁷: **H04L 25/02**, H04L 27/26,
H04L 1/12

(21) Numéro de dépôt: **00400513.8**

(22) Date de dépôt: **25.02.2000**

(54) **Système pour l'estimation du gain complexe d'un canal de transmission**

System zur Schätzung der komplexen Verstärkung eines Übertragungskanals

System for estimating the complex gain of a transmission channel

(84) Etats contractants désignés:
**AT BE CH CY DE DK ES FI FR GB GR IE IT LI LU MC NL PT SE**

(30) Priorité: **26.02.1999 FR 9902440**

(43) Date de publication de la demande:
**30.08.2000 Bulletin 2000/35**

(72) Inventeur: **Laurent, Pierre-André,
Thomson-CSF Prop. Intell.
94117 Arcueil Cédex (FR)**

(73) Titulaire: **Thales
75008 Paris (FR)**

(56) Documents cités:
**EP-A- 0 887 977          WO-A-96/13910
GB-A- 2 247 812**

• **PATENT ABSTRACTS OF JAPAN vol. 1996, no. 10, 31 octobre 1996 (1996-10-31) & JP 08 149176 A (HITACHI), 7 juin 1996 (1996-06-07)**

**Description**

La présente invention concerne un système pour l'estimation du -gain complexe d'un canal de transmission.

Elle s'applique notamment au domaine de la radio diffusion numérique mettant en oeuvre des modulateurs/démodulateurs parallèles dans les bandes des grandes ondes, des ondes moyennes et des ondes courtes modulées en amplitude.

GB 2 247 812 décrit un égaliseur dont les paramètres sont définis par les valeurs d'interpolation entre deux réponses impulsionelles du canal de transmission.

Les procédés présentant les meilleurs compromis en coût et efficacité sont basés sur l'emploi d'un modulateur/démodulateur parallèle, qui est souvent décrit comme étant la juxtaposition d'un grand nombre N de plusieurs centaines de modulateurs/démodulateurs élémentaires à bas débit de quelques dizaines de bits par seconde calés chacun sur une fréquence centrale qui lui est propre. Ces fréquences centrales sont rapprochées le plus possible les unes des autres, pour que le débit binaire des informations transmises soit maximum dans la bande de fréquence attribuée à l'émetteur.

A titre d'exemple un modulateur/démodulateur parallèle doit pouvoir travailler suivant les standards actuels de radio diffusion à l'intérieur d'une bande totale de 9 kHz comportant 288 porteuses espacées de 31,25 Hz, chacune étant modulée indépendamment de ses voisines, tout en étant synchrone entre elles.

Lorsque le canal de transmission est instable, particulièrement en ondes courtes. il est essentiel de pouvoir suivre ses variations et donc d'estimer son gain complexe en amplitude et phase à tout instant et sur chaque porteuse pour pouvoir utiliser un procédé de démodulation dite cohérente qui permet d'exploiter de façon optimale des modulations multi-états à grande efficacité spectrale, c'est à dire caractérisées par un grand nombre de bits/s transmis par Hz de bande occupée.

L'estimation du gain complexe du canal s'effectue habituellement par insertion de symboles d'amplitudes et de phases connues suivant un motif régulier prédéterminé. Ces symboles portent encore le nom de "référence de gain". Ils présentent une proportion aussi faible que possible de tous les symboles transmis, toujours afin de rendre maximum le débit utile.

Le gain complexe du canal à n'importe quel instant et sur n'importe quelle fréquence peut alors être estimé par un procédé d'interpolation qui, à partir des gains mesurés sur les références de gain, calcule le gain du canal à la position souhaitée.

Le procédé est comparable à celui d'un filtrage, et consiste à calculer une somme pondérée des références de gain voisines de la cellule considérée.

Une première solution connue consiste à effectuer une interpolation temporelle suivie d'une interpolation fréquentielle. Deux passes sont alors nécessaires.

La première passe consiste à estimer le gain complexe du canal sur un symbole déterminé de chacune des porteuses à partir des références de gain situées dans le passé et dans le futur par interpolation. Cette interpolation se fait par une combinaison linéaire d'un nombre déterminé Kt de références de gain.

La deuxième passe consiste à effectuer un filtrage suivant l'axe des fréquences par un filtre transverse afin d'améliorer l'estimation. Tous les gains estimés à un instant déterminé sur les porteuses voisines d'une porteuse donnée sont combinés au gain estimé sur cette porteuse pour améliorer le rapport signal à bruit. Cette interpolation a lieu sur Kf porteuses.

Dans cette première solution N est le nombre de porteuses, et la complexité de l'ensemble qui en résulte est proportionnelle à $N.Kt + Nkf = N(Kt + Kf)$.

Une deuxième solution consiste à effectuer une interpolation bidimensionnelle. Dans ce cas, l'estimation a lieu en une seule passe, et est le résultat d'une combinaison d'interpolation temporelle et fréquentielle. Le gain estimé à un instant donné sur une porteuse examinée est une combinaison linéaire des gains des références de gain présentes dans le passé, le présent et le futur de l'instant considéré, sur la porteuse examinée et ses voisines.

Pour obtenir des performances voisines de celles de la première solution, il est nécessaire de considérer un peu moins de $Kt.Kf$ références de gain à chaque interpolation en ne gardant que celles qui sont " les plus corrélées" avec le gain à estimer, ce qui équivaut à une complexité de l'ordre de $3/4.N.Kt.Kf$.

Une troisième solution consiste à effectuer une projection sur des vecteurs propres. Dans ce cas le signal reçu est considéré comme résultant de la somme de R répliques du signal original transmises sur un canal multitrajets. L'ensemble des gains du canal considérés à un instant donné et sur les N porteuses peut être réduit à un vecteur de gain qui est la somme de R vecteurs à évolution lente (bande étroite) plus ou moins décorrélés et d'un vecteur de bruit aléatoire.

La méthode utilisée consiste à calculer l'autocorrélation des gains selon l'axe des fréquences, à former une matrice ayant ces autocorrélations comme coefficients, à trouver ses valeurs propres, et garder les R vecteurs propres correspondant aux R trajets.

Le vecteur des gains est alors projeté sur ces vecteurs propres et la projection est considérée comme l'ensemble des gains lissés, débarrassés du bruit.

La complexité de cette méthode est celle qui correspond au calcul des N autocorrélations , suivie du calcul des valeurs propres d'une matrice de dimension NxN, c'est-à-dire très élevée.

Enfin une quatrième solution met en oeuvre une méthode de filtrage adaptatif qui consiste à utiliser l'une des deux méthodes d'interpolation, temps puis fréquence ou bidimensionnelle, et à faire varier les coefficients des filtres interpolateurs au cours du temps selon des méthodes mathématiques bien connues, comme l'algorithme du gradient ou du gradient simplifié, l'algorithme du signe, ou même celle consistant réeffectuer le même calcul à intervalles réguliers. Dans ce cas le degré de complexité est intermédiaire entre celui des méthodes d'interpolation fixe et de projection. Elle présente des risques d'instabilité dans le cas de canaux fortement perturbés comme c'est le cas dans la bande HF des ondes courtes.

Le but de l'invention est d'apporter une solution sub-optimale qui vise à obtenir des performances comparables à celles des méthodes les plus lourdes citées précédemment tout en ayant une complexité très faible qui est une condition sine qua non pour que le récepteur ait un coût d'acquisition et d'usage acceptable, ceci sachant que le canal n'est pas toujours perturbé de la même façon. Les conditions de réception des différentes stations de radiodiffusion qu'il est possible de recevoir à un instant donné sont en effet très variables, certaines stations étant reçues "fort et clair", tandis que d'autres sont affectées de bruit et de distorsion. Dans ces conditions, il parait évident que le travail qu'aura à effectuer l'estimateur de canal du récepteur ne sera pas le même dans les deux cas.

Pire encore, on constate qu'un interpolateur adapté à un canal perturbé dégrade les performances sur un canal de bonne qualité, ce qui peut s'expliquer en considérant qu'un interpolateur se comporte comme un filtre de lissage passe bas qui doit être large quand le canal est instable et plutôt étroit quand le canal est stable. Dans le cas ou le filtre est adapté à un canal instable et que le canal est stable, ce filtre va recevoir trop de bruit en plus du signal utile que représentent les références de gain reçues. Si au contraire, le filtre est adapté à un canal stable et que le canal évolue rapidement, il devient impossible de suivre ses évolutions, si bien que, s'il y a peu de bruit, le canal est mal estimé et la qualité de l'estimateur est médiocre.

Il convient donc d'avoir à chaque instant des interpolateurs suffisamment adaptés à la situation courante qui dépend de l'heure et de la station reçue, les performances pouvant être moins bonnes qu'avec des interpolateurs optimaux mais suffisantes pour que la dégradation passe inaperçue.

A cet effet, l'invention a pour objet, un système pour l'estimation du gain complexe d'un canal de transmission destiné à des modulateurs /démodulateurs de type parallèle utilisables en radiodiffusion numérique caractérisé en ce qu'il comporte :

- un nombre déterminé de N jeux interpolateurs pour estimer le gain sur un symbole utile à partir de symboles connus constituant des références de gain régulièrement disposés dans le signal émis, chaque jeu d'interpolateurs étant adapté à une situation particulière de réception, allant d'un canal monotrajet stable à un canal à forte dispersion temporelle et forte instabilité, lesdites sorties des interpolateurs étant couplées à un dispositif de sélection programmé pour choisir le jeu d'interpolateurs qui donne le plus faible bruit estimé pendant une durée déterminée.

L'invention a pour avantage celui d'une grande facilité de mise en oeuvre, les algorithmes utilisés pour le calcul des critères de choix étant similaires à ceux normalement nécessaires pour effectuer une démodulation. L'augmentation de la puissance de calcul nécessaire est faible car les critères de choix sont calculés seulement sur les références de gain. Elle a également pour avantage celui de proposer une adaptation à moindre coût à des conditions de réception extrêmement variables. Enfin elle permet d'obtenir une quasi-optimalité, à savoir une faible dégradation des performances par rapport à celles qui pourraient être obtenues avec un système constamment optimal.

D'autres caractéristiques et avantages de l'invention apparaîtront à l'aide de la description qui suit faite en regard des dessins annexés qui représentent:

La figure 1 un mode d'organisation d'un système interpolateur selon l'invention.
La figure 2 une répartition de symboles de référence de gain sur un canal de transmission comportant plusieurs porteuses modulées en parallèle ainsi qu'une illustration du mode de calcul par interpolation qui est effectué selon l'invention.
La figure 3 les différentes étapes du procédé selon l'invention mis sous la forme d'un organigramme.

La solution proposée par l'invention consiste à utiliser plusieurs jeux d'interpolateurs adaptés chacun à une situation donnée, chaque situation étant elle même caractérisée par un étalement doppler qui correspond à la vitesse à laquelle le canal évolue et par un "étalement temporel", qui correspond au décalage entre les deux répliques du signal original qui arrivent au récepteur au plus tôt et au plus tard. Plus le canal évolue vite, plus l'étalement Doppler est important. L'étalement temporel est une mesure de la dispersion du canal de transmission.

Chaque jeu d'interpolateurs effectue une estimation du gain de canal sur une ou plusieurs porteuses à partir des références de gain transmises sur ces porteuses.

A chaque jeu d'interpolateurs est associé un critère de choix. Le $n^{\text{ème}}$ critère est l'estimation de l'erreur d'interpolation qui peut être obtenu en moyenne en utilisant le $n^{\text{ème}}$ jeu d'interpolateurs. Si le n est minimum, c'est logiquement le $n^{\text{ème}}$ jeu d'interpolateurs qui doit être utilisé.

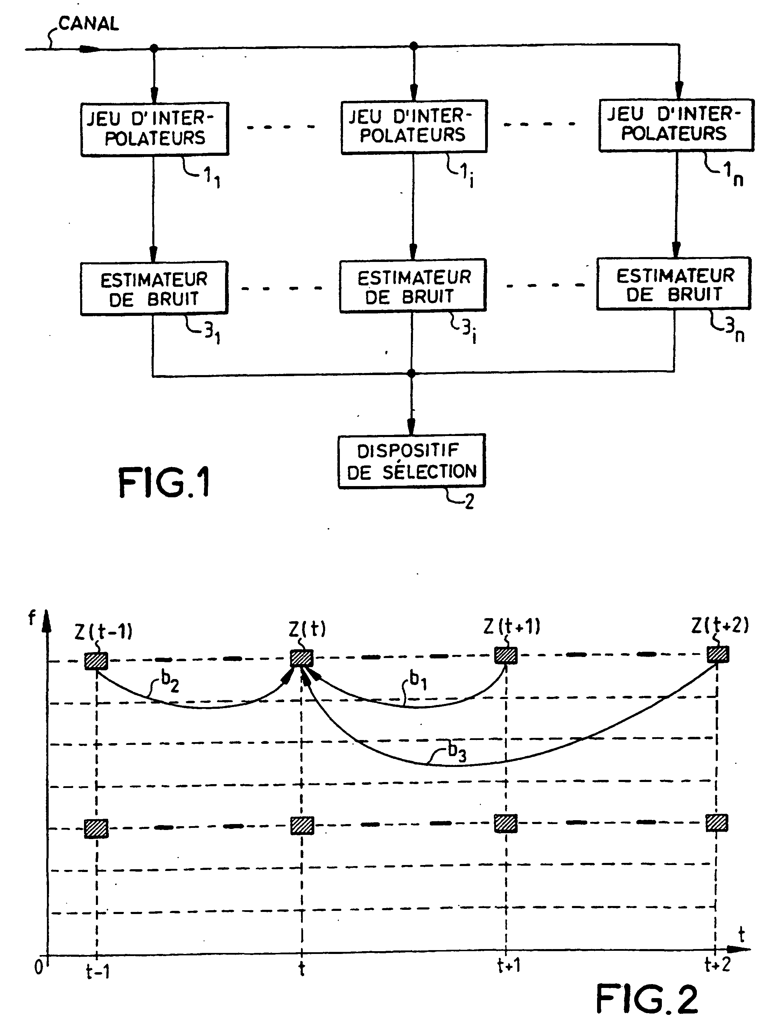

A cette fin le système représenté à la figure 1 comporte N jeux d'interpolateurs référencés de $1_1$ à $1_N$ sur les entrée desquels sont appliqués les signaux démodulés d'un canal de transmission. Les sorties des jeux d'interpolateurs sont couplées à un dispositif de sélection 2 par l'intermédiaire de N dispositifs estimateurs de bruit référencés de $3_1$ à $3_n$

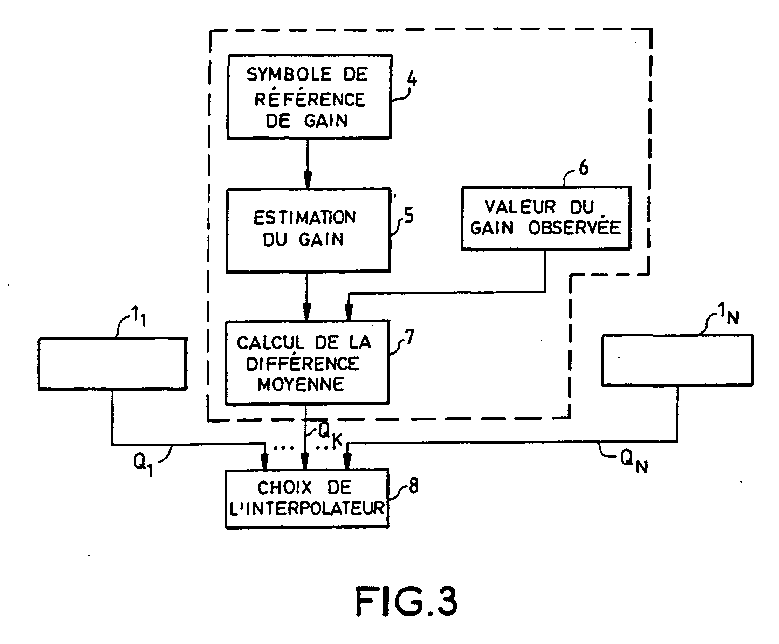

Le critère de sélection consiste à évaluer à un instant donné la moyenne de la différence entre les références de gain et leurs valeurs telles qu'elles sont calculées à partir des références de gain voisines. Ce calcul est fait au moyen d'un filtre spécial caractéristique du jeu d'interpolateurs considéré. Il consiste comme le montre les étapes 4 à 8 de l'organigramme de la figure 3 à effectuer à l'étape 5, pour chaque symbole considéré à l'étape 4 comme une référence de gain, une estimation de ce gain par filtrage à partir de lui même et de ses voisins, et à calculer à l'étape 7 la différence moyenne entre la valeur estimée et la valeur de gain observé à l'étape 6. Plus faible sera la différence, meilleur sera jugé le jeu d'interpolateurs utilisé pour le calcul. Puisque le calcul n'est effectué que sur une référence de gain, et que ces dernières ne représentent qu'une faible proportion des symboles transmis, cela se traduit par une augmentation quasi négligeable de la puissance de calcul nécessaire.

Pour déterminer quel est le meilleur jeu d'interpolateurs correspondant aux conditions courantes le procédé examine sur une ou plusieurs porteuses les seules positions correspondant à des instants connus t=....t-2, t-1, t, t+1, t+2... où le signal reçu r(t) possède un gain connu Z(t) déterminé pour chacun de ces instants, comme représenté sur la figure 2. Dans ce cas le gain du canal direct g(t) est déterminé par la relation:

$$g(t) \text{ direct} = \frac{r(t)}{z(t)} \qquad (1)$$

Le gain g(t) indirect du canal à un instant t est obtenu par interpolation en tenant compte des gains directs du canal aux différents instants de réception des signaux encadrant l'instant t suivant la relation:

$$g(t) \text{ indirect} = \sum_i b_{ik} \frac{r(t + dt(i))}{z(t + dt(i))} \qquad (2)$$

avec $dt(i) \neq 0$ et où $b_{ik}$ désigne des coefficients adaptés à la largeur de bande de variation du canal.

Le calcul de la différence moyenne Q(k) est déterminée à l'étape 7 par la relation:

$$Q_k = <\mid g(t)\text{indirect} - g(t) \text{ direct} \mid^2>_k \qquad (3)$$

Le calcul précédent est répété pour chaque jeu d'interpolateurs. Le jeu d'interpolateurs retenu à l'étape 8 est celui pour lequel l'espérance mathématique $Q_k$ définie par la relation (3) est minimum et apparaît le plus souvent dans une fenêtre de temps déterminée.

Bien entendu compte tenu du caractère aléatoire du bruit présent en permanence, une stratégie de lissage des décisions est exécutée par les blocs estimateurs de bruit $3_1$ à $3_n$ de la figure 1. Cette stratégie peut consister par exemple, à décider que le nouveau jeu d'interpolateurs qui est en cours d'examen est bien le bon lorsque le critère défini par la relation (3) est minimum au moins un nombre déterminé de fois de suite au cours d'un nombre déterminé de symboles successifs, ou à conserver l'ancien dans le cas contraire. Le jeu d'interpolateurs n'est modifié qu'en allant à un jeu voisin correspondant à un étalement temporel un peu plus important ou un peu plus faible ou correspondant à un étalement fréquentiel un peu plus important ou un peu plus faible.

En pratique, il s'avère que le système peut être limité à un nombre égal à trois jeux d'interpolateurs, un jeu d'interpolateurs pour des conditions peu sévères c'est à dire à faible étalement temporel et canal stable, un jeu d'interpolateurs pour les conditions les plus sévères que peut supporter le système, et un jeu d'interpolateurs pour des conditions intermédiaires entre ces deux extrêmes.

## Revendications

1.  Système pour l'estimation du gain complexe d'un canal de transmission destiné à des modulateurs/démodulateurs de type parallèle utilisables en radiodiffusion numérique **caractérisé en ce qu'**il comporte :

    -   un nombre déterminé de N jeux d'interpolateurs ($1_1$ à $1_N$) pour estimer le gain sur un symbole utile à partir de symboles connus constituant des références de gain régulièrement disposés dans le signal émis, chaque jeu d'interpolateurs étant adapté à une situation particulière de réception, allant d'un canal mono-trajet stable à un canal à forte dispersion temporelle et forte instabilité, les sorties des interpolateurs étant couplées à un dispositif de sélection (2) programmé pour choisir le jeu interpolateur ($1_1$ à $1_N$) qui donne le plus faible bruit estimé pendant une durée déterminée.

2.  Système selon la revendication 1 **caractérisé en ce que** le dispositif de sélection (2) évalue (5, 6, 7) à un instant donné et pour chaque jeu d'interpolateurs, la moyenne de la différence entre les références de gain et leurs valeurs calculées à partir des références de gain voisines.

3.  Système selon la revendication 2 **caractérisé en ce que** le dispositif de sélection (2) sélectionne (8) le jeu d'interpolateurs pour lequel la valeur calculée de la moyenne de la différence entre les références de gain et leurs valeurs calculées à partir des références de gain voisines est minimale et apparaît le plus souvent au cours d'une fenêtre de temps déterminée.

**4.** Système selon l'une quelconque des revendications 1 à 3 **caractérisé en ce que** les symboles connus constituant les références de gain sont répartis sur une ou plusieurs porteuses d'un même canal de transmission.

## Patentansprüche

**1.** System zum Schätzen der komplexen Verstärkung eines Übertragungskanals, der für Modulatoren/ Demodulatoren vom parallelen Typ bestimmt ist, die in der digitalen Rundfunkübertragung verwendbar sind, **dadurch gekennzeichnet, dass** es aufweist:

eine bestimmte Anzahl von N Sätzen von Interpolatoren ($1_1$ bis $1_N$), um die Verstärkung an einem Nutzsymbol ausgehend von bekannten Symbolen zu schätzen, die im gesendeten Signal gleichmäßig angeordnete Verstärkungsreferenzen bilden, wobei jeder Satz von Interpolatoren an eine besondere Empfangssituation angepasst ist, die von einem stabilen Einwegkanal bis zu einem Kanal mit starker zeitlicher Streuung und hoher Instabilität reicht, wobei die Ausgänge der Interpolatoren mit einer Auswahlvorrichtung (2) gekoppelt sind, die programmiert ist, um den Satz von Interpolatoren ($1_1$ bis $1_N$) auszuwählen, der während einer bestimmten Zeitdauer das schwächste geschätzte Rauschen ergibt.

**2.** System nach Anspruch 1, **dadurch gekennzeichnet, dass** die Auswahlvorrichtung (2) in einem gegebenen Zeitpunkt und für jeden Satz von Interpolatoren den Mittelwert der Differenz zwischen den Verstärkungsreferenzen und ihren ausgehend von benachbarten Verstärkungsreferenzen berechneten Werten ermittelt (5, 6, 7).

**3.** System nach Anspruch 2, **dadurch gekennzeichnet, dass** die Auswahlvorrichtung (2) den Satz von Interpolatoren auswählt (8), bei dem der berechnete Mittelwert der Differenz zwischen den Verstärkungsreferenzen und ihren ausgehend von den benachbarten Verstärkungsreferenzen berechneten Werten minimal ist und am häufigsten während eines bestimmten Zeitfensters auftritt.

**4.** System nach einem der Ansprüche 1 bis 3, **dadurch gekennzeichnet, dass** die die Verstärkungsreferenzen bildenden bekannten Symbole auf eine oder mehrere Trägerwellen des gleichen Übertragungskanals verteilt sind.

## Claims

**1.** System for the estimation of the complex gain of a transmission channel designed for parallel type modulators/demodulators that can be used in digital radio broadcasting, **characterized in that** it comprises:

- a given number N of sets of interpolators ($1_1$ to $1_N$) to estimate the gain on a useful symbol from known symbols constituting gain references evenly positioned in the transmitted signal, each set of interpolators being adapted to a particular receive situation, ranging from a stable single-path channel to a channel with high temporal dispersion and high instability, the outputs of said interpolators being coupled to a selection device (2) programmed to choose the set of interpolators ($1_1$ to $1_N$) that gives the lowest estimated noise during a specified length of time.

**2.** System according to Claim 1, **characterized in that** the selection device (2) makes an assessment (5, 6, 7), at a given point in time and for each set of interpolators, of the mean difference between the gain references and their values computed on the basis of the neighbouring gain references.

**3.** System according to Claim 2, **characterized in that** the selection device (2) selects (8) the set of interpolators for which the computed value of the mean difference between the gain references and their values computed from the neighbouring gain references is minimal and most usually appears during a given time window.

**4.** System according to one of Claims 1 to 3, **characterized in that** the known symbols constituting the gain references are distributed on one or more carriers of one and the same transmission channel.

FIG.1

FIG.2

FIG.3